# FASCICULE DE BREVET EUROPEEN

(11) **EP 3 393 748 B1**
(45) Date de publication et mention de la délivrance du brevet: **08.09.2021**
(21) Numéro de dépôt: 16826419.0
(22) Date de dépôt: 20.12.2016
(51) Int. Cl.: B29C 48/07, B29C 48/12, B29C 48/35, B29C 48/21, B29C 48/49, B29D 30/52, B29L 30/00

(54) **PROCEDE DE COEXTRUSION D'UN PROFILE CAOUTCHOUTEUX COMPLEXE DESTINE A LA FABRICATION D'UN PNEUMATIQUE**
VERFAHREN ZUM COEXTRUDIEREN EINES KOMPLEXEN KAUTSCHUKPROFILS ZUR HERSTELLUNG EINES REIFENS
METHOD FOR CO-EXTRUDING A COMPLEX RUBBER PROFILE INTENDED FOR MANUFACTURING A TYRE

(30) Priorité: 23.12.2015 FR 1563246
(43) Date de publication de la demande: 31.10.2018
(73) Titulaire: Compagnie Générale des Etablissements Michelin, 63000 Clermont-Ferrand (FR)
(72) Inventeur: BESSAC, Chrsitophe, 63040 Clermont-Ferrand Cedex 9 (FR); ROUBY, Mickael, 63040 Clermont-Ferrand Cedex 9 (FR)
(74) Mandataire: Roussy, Delphine
(86) Numéro de dépôt international: PCT/FR2016/053584
(87) Numéro de publication internationale: WO 2017/109392

(56) Documents cités:
- EP-A1- 0 847 880
- EP-A1- 0 868 991
- EP-A1- 2 865 543
- EP-A2- 0 174 260
- WO-A1-2004/096583
- FR-A1- 2 916 383
- US-A- 5 017 118

## Description

L'invention se situe dans le domaine de la fabrication de pneumatiques, et plus précisément dans le domaine de la coextrusion de profilés caoutchouteux complexes.

Par profilé caoutchouteux complexe, on entend un profilé composé de différents profilés réalisés dans différents mélanges élastomériques et assemblés les uns aux autres. Une variété de solutions est proposée, par exemple, par les publications EP2865543, WO2004/096583, EP0868991 et EP0847880.

Au cours de l'assemblage d'une ébauche de pneumatique, on dépose sur la carcasse conformée un profilé de bande de roulement prenant la forme d'un tronçon découpé dans un profilé caoutchouteux complexe et non vulcanisé.

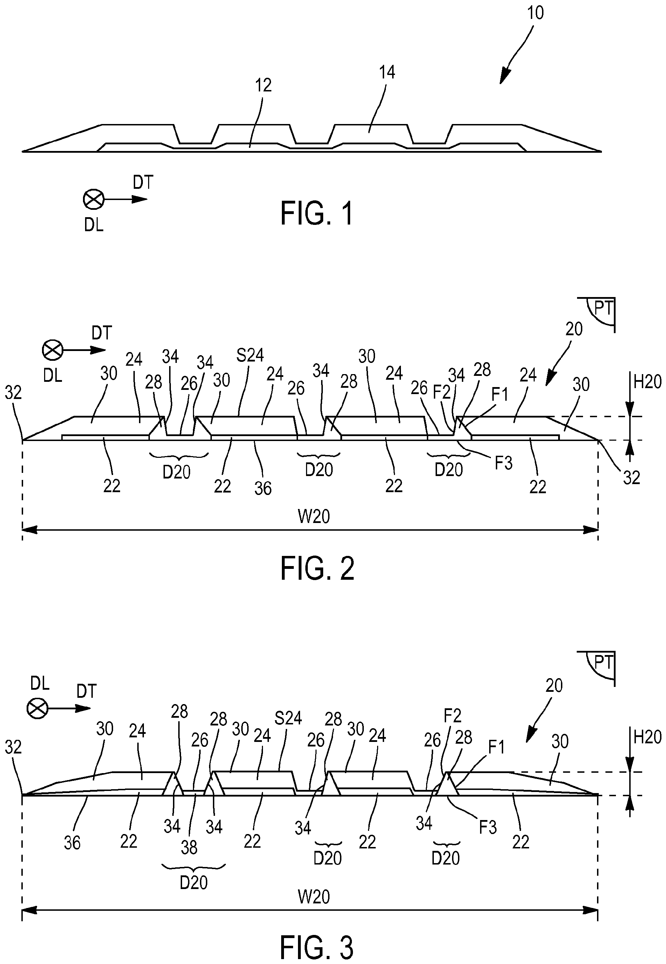

Plus précisément, et comme l'illustre la figure 1, ce tronçon de profilé caoutchouteux complexe 10 comprend une sous-couche 12 continue transversalement et sur laquelle est superposée une autre couche 14 continue transversalement. Cette autre couche 14 est dite bande de roulement car destinée à venir au contact du sol lors du roulage du pneumatique sur le sol. La sous-couche 12 n'étant pas destinée à venir en contact avec le sol, elle est réalisée dans un mélange élastomérique différent du mélange élastomérique de la bande roulement 14 et ne présentant pas, par exemple, la même composition ou les mêmes caractéristiques et performances.

Selon un procédé de fabrication connu et décrit dans US 5 017 118 A, ce profilé caoutchouteux complexe est obtenu par coextrusion. Grâce à cette technique, les différents profilés en différents mélanges du profilé complexe sont extrudés et assemblés simultanément sur une seule machine de fabrication.

La coextrusion permet aussi de fabriquer des profilés complexes comprenant une sous-couche 12, une bande de roulement 14, et d'autres profilés de protection superposés sur les extrémités transversales de la bande de roulement 14 et réalisés dans un troisième mélange élastomérique ayant une composition et des caractéristiques différentes des caractéristiques du mélange de sous-couche et du mélange de bande de roulement.

Toutefois, et comme la sous-couche 12 et la bande de roulement 14, ces profilés de protection sont continus transversalement.

En raison de la faible conductivité électrique des mélanges élastomériques utilisés pour la réalisation de la sous-couche 12 et de la bande de roulement 14, il a été développé des machines de coextrusion permettant de coextruder la sous-couche 12 et la bande de roulement 14 avec un insert les traversant et réalisé dans un mélange élastomérique électriquement conducteur. Des solutions sont divulguées par les publications EP2865543, WO2004/096583, EP0868991 et EP0847880.

Une telle machine de coextrusion est par exemple décrite dans le brevet européen EP1448355.

Selon ce document EP1448355, cette machine comprend une extrudeuse principale comportant une tête d'extrusion comprenant au moins deux canaux d'écoulement d'un mélange caoutchouteux de sous-couche et d'un mélange caoutchouteux de bande de roulement, lesdits canaux débouchant sur un orifice d'extrusion au travers duquel sont refoulés les deux mélanges caoutchouteux de sous-couche et de bande de roulement, et l'orifice d'extrusion étant délimité par une première et une deuxième parois.

En vue de la réalisation d'un insert électriquement conducteur au travers de la sous-couche et de la bande de roulement du profilé complexe coextrudé, la tête d'extrusion comprend également au moins une micro-extrudeuse d'un troisième mélange caoutchouteux électriquement conducteur, et la tête d'extrusion de cette micro-extrudeuse est munie à son extrémité d'une buse, ladite buse traversant dans les deux canaux d'écoulement de sorte que le troisième mélange caoutchouteux électriquement conducteur soit inséré dans les mélanges caoutchouteux de sous-couche et de bande de roulement en amont de l'orifice d'extrusion.

Selon un premier inconvénient, la buse décrite dans ce document EP1448355 ne convient pas à l'extrusion d'un insert réalisé dans un mélange élastomérique lui conférant une grande rigidité, ou du moins une rigidité supérieure aux rigidités conférées à la sous-couche et à la bande de roulement par leurs mélanges respectifs. En effet, un tel mélange nécessiterait une pression d'extrusion trop importante en comparaison des pressions d'extrusion utilisées pour l'extrusion des mélanges de sous-couche et de bande de roulement, ce qui pourrait nuire à la qualité du profilé complexe coextrudé, notamment en aboutissant à l'extrusion d'un insert beaucoup plus large que nécessaire pour la conduction électrique ou de section variable aléatoirement dans la longueur du profilé.

Selon un autre inconvénient, et que le troisième mélange extrudé par cette buse confère ou non une rigidité importante à l'insert, cette buse ne permet pas d'extruder le troisième matériau selon une section précise dans le plan transversal du profilé complexe. De plus, cette buse ne permet pas non plus de réaliser un insert qui ne soit pas enserré de part et d'autre par la bande de roulement et la sous-couche.

Or, il se trouve justement que, avec l'utilisation de plus en plus importante de bandes de roulement réalisées dans des mélanges élastomériques conférant à ces bandes de roulement des rigidités de plus en plus faibles et donc un comportement hystérétique de plus en plus important, il existe aujourd'hui dans l'industrie de la fabrication de pneumatiques un besoin de rigidifier les profilés complexes de bande de roulement via des inserts ayant une section précise dans le plan transversal du profilé complexe, qui ne soient pas enserrés de part et d'autre par la bande de roulement et la sous-couche, et qui soient réalisés dans un mélange élastomérique leur conférant une rigidité supérieure aux rigidités conférées à la sous-couche et à la bande de roulement par leurs mélanges respectifs.

Aussi, la présente invention a pour objectif de parer à au moins l'un des inconvénients identifiés dans l'art antérieur et de répondre aux besoins industriels précités.

A cet effet, l'invention a pour objet un procédé de coextrusion d'un profilé caoutchouteux complexe destiné à la fabrication d'un pneumatique, le profilé complexe comprenant dans sa hauteur une première couche, dite sous-couche, d'un premier matériau caoutchouteux et une deuxième couche, dite bande de roulement, d'un deuxième matériau caoutchouteux superposée sur la sous-couche.

Selon l'invention, cette bande de roulement et cette sous-couche présentent au moins une discontinuité dans la largeur du profilé complexe qui s'étend dans une direction transversale de façon à ce qu'au moins un insert d'un troisième matériau caoutchouteux soit inséré dans une discontinuité de la bande de roulement et de la sous-couche lors de la coextrusion.

Toujours selon l'invention, le procédé consiste à extruder et à profiler les différents matériaux caoutchouteux sur une largeur de coextrusion donnée et dans une direction longitudinale de coextrusion perpendiculaire au plan transversal du profilé coextrudé, le procédé comprenant successivement les étapes consistant en :
a) une extrusion du premier matériau réalisée de manière discontinue dans la largeur de coextrusion,
b) un premier profilage de ce premier matériau réalisé de manière discontinue dans la largeur de coextrusion,
c) une extrusion du deuxième matériau réalisée de manière discontinue dans la largeur de coextrusion et réalisée de manière à superposer le deuxième matériau sur le premier matériau,
d) un profilage des premier et deuxième matériaux réalisé de manière discontinue dans la largeur de coextrusion et réalisé conjointement à une extrusion du troisième matériau dans chaque discontinuité du premier matériau et du deuxième matériau, et
e) un profilage final des premier, deuxième et troisième matériaux selon un profil final ne présentant pas de discontinuité dans la largeur de coextrusion, mais créant une rainure longitudinale dans le profilé située transversalement à côté de chaque insert issu d'une extrusion du troisième matériau selon l'étape d).

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue schématique en coupe transversale d'un profilé caoutchouteux complexe selon l'art antérieur,
- la figure 2 est une vue schématique en coupe transversale d'une première variante d'un profilé caoutchouteux complexe réalisable avec une première variante d'une tête de coextrusion selon l'invention,
- la figure 3 est une vue schématique en coupe transversale d'une seconde variante d'un profilé caoutchouteux complexe réalisable avec une seconde variante d'une tête de coextrusion selon l'invention,
- la figure 4 est une vue schématique de côté d'une machine de coextrusion comprenant une tête de coextrusion selon l'invention,
- la figure 5 est une vue en perspective d'une première variante d'une tête de coextrusion selon l'invention,
- la figure 6 est une vue de détail de face d'une première variante d'une tête de coextrusion selon l'invention,
- la figure 7 est une vue en perspective d'une seconde variante d'une tête de coextrusion selon l'invention,
- la figure 8 est une vue de détail de face d'une seconde variante d'une tête de coextrusion selon l'invention,
- la figure 9 est une vue en perspective et en coupe d'une seconde variante d'une tête de coextrusion selon l'invention,
- la figure 10 est une première vue en coupe longitudinale d'une seconde variante d'une tête de coextrusion selon l'invention,
- la figure 11 est une deuxième vue en coupe longitudinale d'une seconde variante d'une tête de coextrusion selon l'invention,
- la figure 12 est une troisième vue en coupe longitudinale d'une seconde variante d'une tête de coextrusion selon l'invention,
- la figure 13 est une quatrième vue en coupe longitudinale d'une seconde variante d'une tête de coextrusion selon l'invention.

Les figures 2 et 3 illustrent de manière schématique deux variantes de profilés caoutchouteux complexes destinés à la fabrication de pneumatiques et pouvant être fabriqués par coextrusion grâce à la présente invention.

Dans l'une et l'autre de ces deux variantes, le profilé caoutchouteux complexe 20 comprend dans sa hauteur H20 une première couche 22, dite sous-couche, d'un premier matériau caoutchouteux et une deuxième couche 24, dite bande de roulement, d'un deuxième matériau caoutchouteux superposée sur la sous-couche 22.

Par matériau caoutchouteux, on entend un mélange élastomérique non vulcanisé. Dans le cadre de la présente invention, la sous-couche 22 et la bande de roulement 24 sont réalisées dans des matériaux différents, et donc à partir de mélanges élastomériques n'ayant pas la même composition et/ou les mêmes caractéristiques.

Par ailleurs, et en vue de la réalisation des sillons circonférentiels du futur pneumatique, le profilé caoutchouteux complexe 20 comprend aussi des rainures longitudinales 26. Dans l'une ou l'autre des deux variantes illustrées sur les figures 2 et 3, le profilé caoutchouteux complexe 20 comprend trois rainures longitudinales 26. Ces trois rainures longitudinales 26 s'étendent parallèlement dans la direction longitudinale DL prise dans la longueur du profilé complexe 20. Ces trois rainures longitudinales 26 sont espacées les unes des autres dans la direction transversale DT prise dans la largeur W20 du profilé complexe 20. Ces trois rainures longitudinales 26 s'étendent en profondeur dans la hauteur H20 du profilé complexe 20 sans le traverser. Ces trois rainures longitudinales 26 débouchent dans la surface supérieure S24 de la bande de roulement 24. Ces trois rainures longitudinales 26 séparent le profilé en quatre pains longitudinaux 30 dans lesquels seront moulées les sculptures du futur pneumatique. Les deux pains 30 centraux ont un profil sensiblement parallélépipédique dans le plan transversal PT du profilé complexe 20, tandis que les pains 30 d'extrémité ont un profil sensiblement trapézoïdal dans le plan transversal PT du profilé complexe 20 et s'affinant vers les extrémités transversales 32 du profilé complexe 20 dans la direction transversale DT.

Selon l'invention, cette bande de roulement 24 et cette sous-couche 22 présentent au moins une discontinuité D20 dans la largeur W20 du profilé complexe 20 de façon à ce qu'au moins un insert 28 d'un troisième matériau caoutchouteux soit inséré dans chaque discontinuité D20 de la bande de roulement 24 et de la sous-couche 22 lors de la coextrusion.

Le profilé caoutchouteux complexe 20 comprenant trois rainures longitudinales 26 dans l'une ou l'autre des deux variantes illustrées sur les figures 2 et 3, la bande de roulement 24 et la sous-couche 22 présentent trois discontinuités D20 dans la largeur W20 du profilé complexe 20 et au moins un insert 28 dans chacune de ces discontinuités D20.

Le troisième matériau caoutchouteux de réalisation des inserts 28 est différent des matériaux de la sous-couche 22 et de la bande roulement 24. Ce troisième matériau des inserts 28 est un mélange élastomérique ayant une composition et/ou des caractéristiques différentes des mélanges formant la sous-couche et la bande de roulement. Avantageusement, ce troisième matériau des inserts 28 offre une rigidité supérieure aux matériaux de la sous-couche 22 et de la bande de roulement 24. Ainsi, les inserts 28 permettent de rigidifier les pains longitudinaux 30, ce qui permet d'utiliser un matériau moins rigide et offrant de meilleures performances d'adhérence au futur pneumatique pour réaliser la bande de roulement 24.

Plus en détail, chaque insert 28 s'étend sur toute la hauteur H20 du profilé complexe 20. Chaque insert 28 présente une section précise dans le plan transversal PT du profilé 20. Ainsi, la section d'un insert 28 dans le plan transversal PT comprend au moins une sous-section triangulaire.

Dans la première variante du profilé 20, la section d'un insert 28 dans le plan transversal PT comprend une sous-section parallélépipédique située sous la sous-section triangulaire, et un même insert 28 peut comprendre deux sous-sections triangulaires distantes l'une de l'autre dans la direction transversale et reliées par cette sous-section parallélépipédique. Dans cette première variante du profilé 20, le fond d'une rainure longitudinale 26 est constitué par la sous-section parallélépipédique d'un insert 28.

Dans la seconde variante d'un profilé 20, la section d'un insert 28 dans le plan transversal PT est triangulaire. Toujours dans cette seconde variante d'un profilé 20, deux inserts 28 de section triangulaire peuvent se situer dans une même discontinuité D20 tout en étant distants l'un de l'autre dans la direction transversale DT. Dans cette seconde variante d'un profilé 20, et dans le cas où deux inserts 28 de section triangulaire se situent dans une même discontinuité D20 tout en étant distants l'un de l'autre, le fond d'une rainure longitudinale 26 est constitué par une bande 38 de section sensiblement parallélépipédique du matériau de la bande de roulement 24.

Dans l'une ou l'autre des variantes du profilé 20, chaque insert 28 forme un flanc 34 d'un pain 30. Par conséquent, une première face F1 d'un insert 28 s'étendant dans la hauteur H20 du profilé 20 est accolée aux matériaux de la sous-couche 22 et de la bande de roulement 24, une deuxième face F2 d'un insert 28 s'étendant dans la hauteur H20 du profilé 20 forme le flan 34 d'un pain 30, et une troisième face F3 d'un insert 28 forme la surface inférieure 36 du profilé 20 avec la sous-couche 22 et éventuellement avec la bande de roulement 24 aux extrémités transversales 32 du profilé 20.

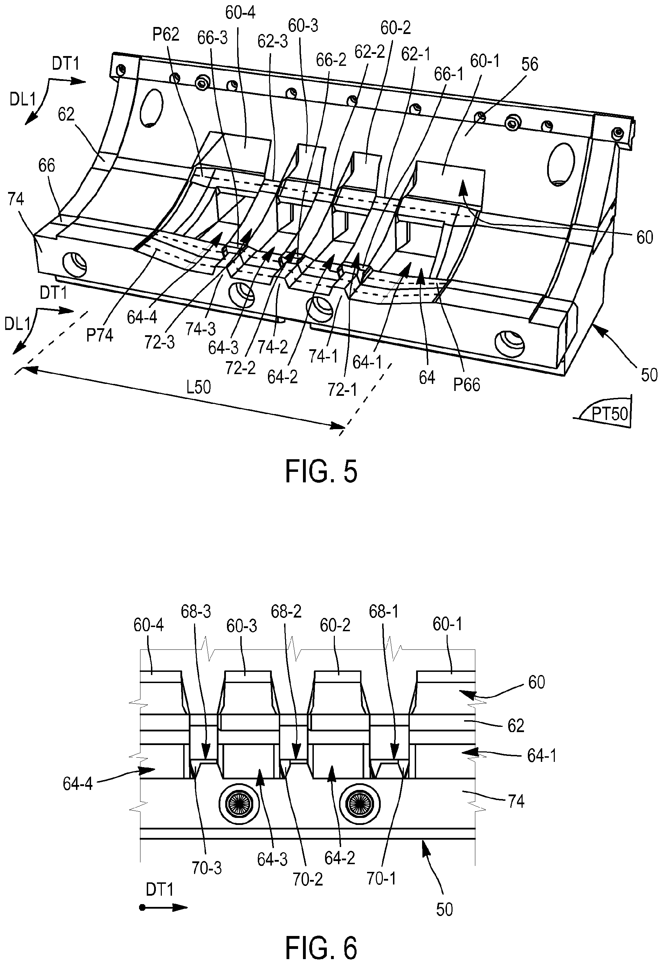

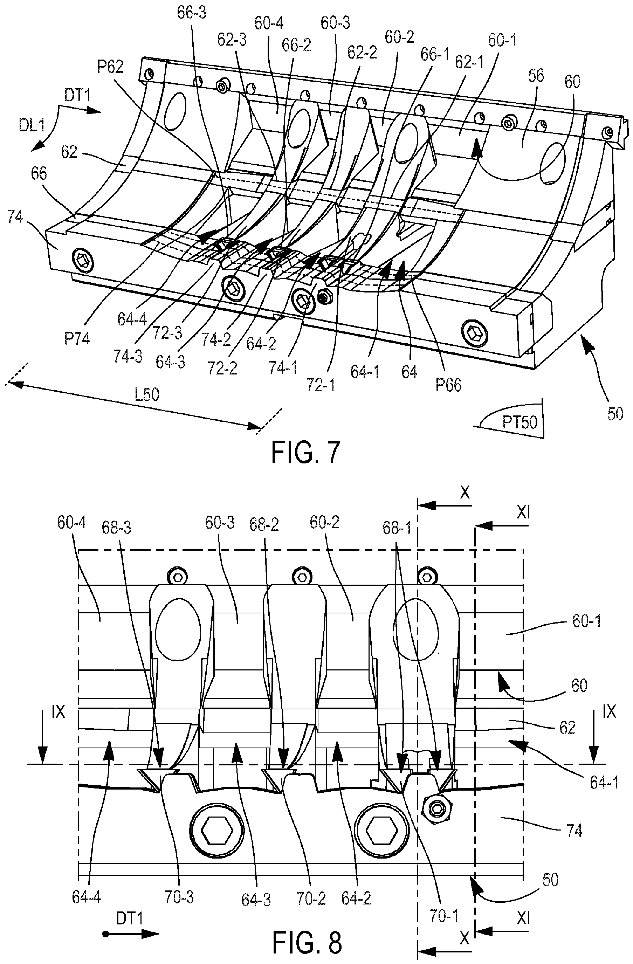

En vue de la coextrusion de ces deux variantes d'un profilé complexe 20, l'invention propose une tête de coextrusion 50. Une première variante de cette tête de coextrusion 50, illustrée en détail par les figures 5 et 6, est destinée à la coextrusion de la première variante du profilé complexe 20, tandis qu'une seconde variante de cette tête de coextrusion 50, illustrée par les figures 7 et 8, est destinée à la coextrusion de la seconde variante du profilé complexe 20.

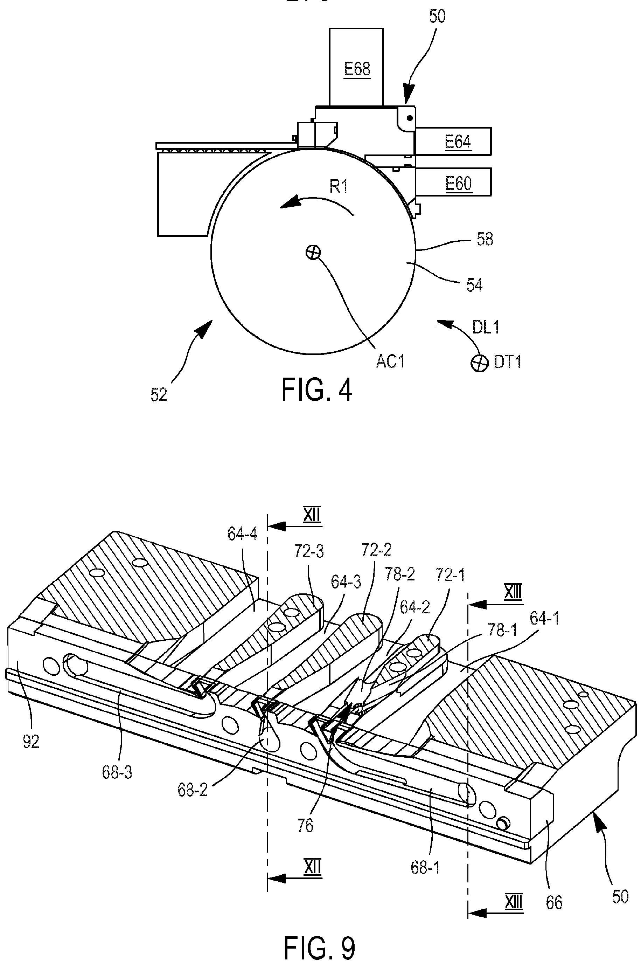

Dans l'une ou l'autre de ses variantes, et comme l'illustre la figure 4, la tête 50 est destinée à être montée sur une machine de coextrusion 52 à rouleau cylindrique 54. A cet effet, la tête 50 comprend une paroi inférieure 56 à profil cylindrique s'étendant radialement en longueur dans une direction longitudinale DL1 autour d'un axe central AC1 et s'étendant rectilignement en largeur dans une direction transversale DT1 parallèle à l'axe central AC1 et perpendiculaire à la direction longitudinale DL1. Cette paroi inférieure 56 est destinée à être rapportée sur la paroi extérieure 58 du rouleau cylindrique 54 en vue de coextruder le profilé complexe 20. Lors du fonctionnement de la machine de coextrusion, le rouleau cylindrique 54 est mis en rotation R1 autour de l'axe central AC1.

Selon l'invention, et toujours dans l'une ou l'autre de ses variantes, la tête 50 comprend d'amont en aval de cette paroi inférieure 56 à profil cylindrique et dans la direction longitudinale DL1:
a) un premier canal d'extrusion 60 débouchant dans la paroi inférieure 56 de la tête de coextrusion, ce premier canal d'extrusion 60 étant séparé en différents sous-canaux 60-1,60-2,60-3,60-4 dans la direction transversale DT1,
b) une première lame de profilage 62 définissant un premier profil de profilage P62 discontinu dans la direction transversale DT1 et se situant radialement au-delà de la paroi inférieure 56 de la tête de coextrusion par intermittence dans la direction transversale DT1,
c) un deuxième canal d'extrusion 64 débouchant dans la paroi inférieure 56 de la tête de coextrusion, ce deuxième canal d'extrusion 64 étant séparé en différents sous-canaux 64-1,64-2,64-3,64-4 dans la direction transversale DT1,
d) une deuxième lame de profilage 66 définissant un deuxième profil de profilage P66 discontinu dans la direction transversale DT1 et se situant radialement au-delà de la paroi inférieure 56 de la tête de coextrusion par intermittence dans la direction transversale DT1, cette deuxième lame de profilage P66 intégrant au moins un troisième canal d'extrusion 68-1,68-2,68-3 débouchant dans la paroi inférieure 56 de la tête de coextrusion, et au moins une sortie 70-1,70-2,70-3 de ce troisième canal se situant dans le prolongement dans la direction longitudinale DL1 d'un élément séparateur 72-1,72-2,72-3 séparant le premier canal d'extrusion 60 en sous-canaux 60-1,60-2,60-3,60-4 dans la direction transversale DT1, créant une discontinuité dans le premier profil de profilage P62 de la première lame de profilage 62 dans la direction transversale DT1, et séparant le deuxième canal d'extrusion 64 en sous-canaux 64-1,64-2,64-3,64-4 dans la direction transversale DT1, et
e) une troisième lame de profilage 74 définissant un profil final de profilage P74 se situant radialement au-delà de la paroi inférieure 56 de la tête de coextrusion, ce profil final de profilage P74 ne présentant pas de discontinuité dans la direction transversale DT1, mais comprenant une dent 74-1,74-2,74-3 en saillie devant et à côté de chaque sortie 70-1,70-2,70-3 d'un troisième canal 68-1,68-2,68-3 dans la direction transversale DT1, chaque dent 74-1,74-2,74-3 s'étendant radialement intérieurement mais n'atteignant pas la paroi inférieure 56 de la tête de coextrusion.

Si le premier canal d'extrusion 60 permet d'extruder le premier matériau de la sous-couche 22, les sous-canaux 60-1,60-2,60-3,60-4 permettent d'extruder ce premier matériau de manière discontinue dans la largeur de coextrusion L50 de la tête de coextrusion 50. Ainsi, les sous-canaux 60-1,60-2,60-3,60-4 permettent de générer les discontinuités D20 dans la sous-couche 22 dès l'extrusion de ce premier matériau.

Ensuite, la première lame de profilage 62 discontinue comprend des formes en saillie 62-1,62-2,62-3 s'étendant radialement intérieurement jusqu'à la paroi inférieure 56 et permettant de profiler le premier matériau de la sous-couche 22 tout en conservant les discontinuités D20 crées en amont dans cette sous-couche par les sous-canaux 60-1,60-2,60-3,60-4.

Si le deuxième canal d'extrusion 64 permet d'extruder le deuxième matériau de la bande de roulement 24, les sous-canaux 64-1,64-2,64-3,64-4 permettent d'extruder ce deuxième matériau de manière discontinue dans la largeur de coextrusion L50 de la tête de coextrusion 50. Ainsi, les sous-canaux 64-1,64-2,64-3,64-4 permettent de générer les discontinuités D20 dans la bande de roulement 24 dès l'extrusion de ce deuxième matériau.

Puis, la deuxième lame de profilage 66 discontinue comprend des formes en saillie 66-1,66-2,66-3 s'étendant radialement intérieurement jusqu'à la paroi inférieure 56 et permettant de profiler les premier et deuxième matériaux de la sous-couche 22 et de la bande de roulement 24 tout en conservant les discontinuités D20 crées en amont dans cette sous-couche 22 et dans cette bande de roulement 24 par les sous-canaux 60-1,60-2,60-3,60-4 du premier canal 60 et par les sous-canaux 64-1,64-2,64-3,64-4 du deuxième canal 64.

En raison de son positionnement dans le prolongement d'un élément séparateur 72-1,72-2,72-3, la sortie 70-1,70-2,70-3 de chaque troisième canal d'extrusion 68-1,68-2,68-3 permet d'extruder le troisième matériau dans les discontinuités D20 de la sous-couche 22 et de la bande de roulement 24, et ainsi de réaliser les inserts 28 de ce troisième matériau dans la sous-couche 22 et dans la bande de roulement 24.

La troisième lame de profilage 74 termine le profilage des trois matériaux et donne au profilé 20 le profil final de sortie souhaité. Chaque dent 74-1,74-2,74-3 de cette troisième lame 74 permet de réaliser une rainure 26 dans le profilé complexe 20 accolée à un ou deux inserts 28 dans la direction transversale DT1.

Dans la tête de coextrusion 50 selon l'invention, chaque forme en saillie 62-1,62-2,62-3 de la première lame de profilage 62 et chaque forme en saillie 66-1,66-2,66-3 de la deuxième lame de profilage 66 discontinue font respectivement partie d'un élément séparateur 72-1,72-2,72-3.

Lorsque la tête de coextrusion 50 est montée sur la machine de coextrusion 52, les canaux 60,64 et les sous canaux 60-1,60-2,60-3,60-4,64-1,64-2,64-3,64-4 débouchent dans la paroi inférieure 56 et donc contre la paroi externe 58 du rouleau 54, et les profils de profilage P62 et P66 des première et deuxième lames de profilage sont fermés par la paroi externe 58 du rouleau 54.

Afin de conférer au moins une sous-section triangulaire à la section d'un insert 28 dans le plan transversal PT du profilé 20, et dans l'une ou l'autre des variantes de la tête de coextrusion 50, la section de sortie de chaque troisième canal 68-1,68-2,68-3 comprend au moins une sous-section triangulaire dans un plan transversal PT50 perpendiculaire à la direction longitudinale DL1. Plus précisément, un sommet de cette sous-section triangulaire s'étend radialement vers l'extérieur de la paroi inférieure 56 de la tête de coextrusion.

Afin de conférer au moins une sous-section parallélépipédique sous sa sous-section triangulaire à la section d'un insert 28 dans le plan transversal PT du profilé 20, et dans la première variante de la tête de coextrusion 50, la section de sortie d'un troisième canal 68-1,68-2,68-3 dans un plan transversal PT50 comprend une sous-section parallélépipédique située radialement sous la sous-section triangulaire et se prolongeant au-delà de cette sous-section triangulaire dans la direction transversale DT1.

Afin de conférer deux sous-sections triangulaires distantes l'une de l'autre dans la direction transversale DT du profilé 20 et reliées par cette sous-section parallélépipédique à la section d'un insert 28 dans le plan transversal PT du profilé 20, et dans la première variante de la tête de coextrusion 50, la section de sortie d'un troisième canal 68-1,68-2,68-3 dans un plan transversal PT50 comprend deux sous-sections triangulaires reliées par une sous-section parallélépipédique.

Afin de conférer deux sous-sections triangulaires distantes l'une de l'autre dans la direction transversale DT du profilé 20 à la section d'un insert 28 dans le plan transversal PT du profilé 20, et dans la seconde variante de la tête de coextrusion 50, la section de sortie d'un troisième canal 68-1,68-2,68-3 dans un plan transversal PT50 comprend deux sous-sections triangulaires distantes l'une de l'autre dans la direction transversale DT1 et non reliées l'une à l'autre.

Toujours dans la seconde variante de la tête de coextrusion 50, et en vue d'extruder la bande 38 de bande de roulement 24 de section sensiblement parallélépipédique entre deux inserts 28 de section triangulaire se situant dans une même discontinuité D20 tout en étant distants l'un de l'autre, l'élément séparateur 72-1 dans le prolongement duquel se situe une sortie 70-1 d'un troisième canal 68-1 avec une section de sortie comprenant deux sous-sections triangulaires distantes l'une de l'autre comprend un canal interne 76 reliant au moins un sous-canal 64-1,64-2, et de préférence les deux sous-canaux 64-1,64-2, du deuxième canal d'extrusion 64 à la paroi inférieure 56 de la tête de coextrusion, ce canal interne 76 débouchant dans cette paroi inférieure 56 en amont de la sortie 70-1 de ce troisième canal 68-1 dans la direction longitudinale DL1 et entre les deux sous-sections triangulaires de cette sortie 70-1 dans la direction transversale DT1.

Comme le montre la figure 9, ce canal interne 76 est réalisé au travers de l'élément séparateur 72-1 séparant le deuxième canal d'extrusion 64 en deux sous-canaux 64-1,64-2 et dans le prolongement duquel se situe une sortie 70-1 d'un troisième canal 68-1 avec une section de sortie comprenant deux sous-sections triangulaires distantes l'une de l'autre. De préférence, et afin de s'assurer que le canal interne 76 soit alimenté en matériau de bande de roulement 24, ce canal interne 76 comprend deux entrées 78-1,78-2 reliées respectivement aux deux sous-canaux 64-1 et 64-2.

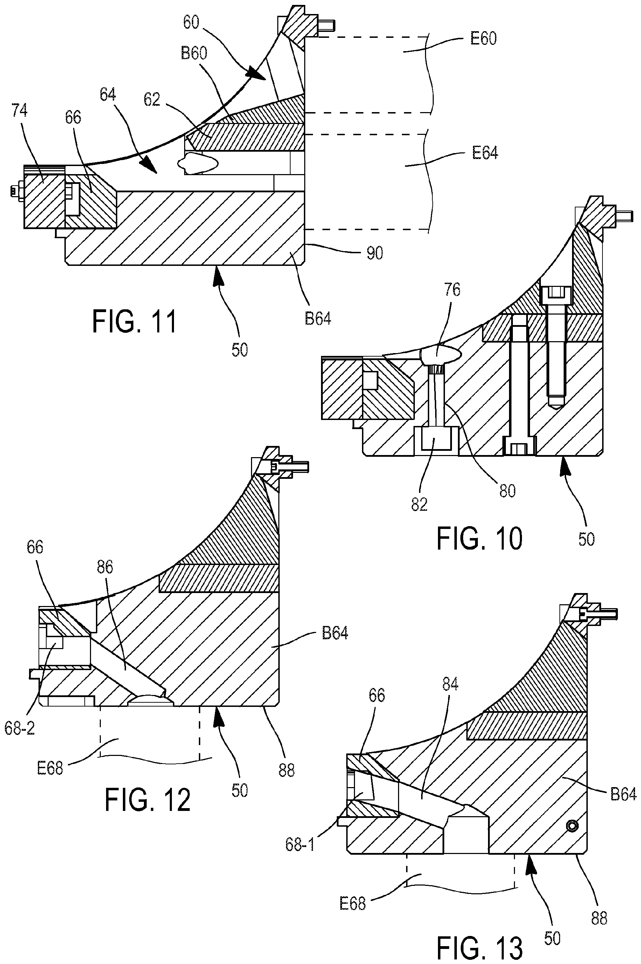

Avantageusement, et comme le montre la coupe longitudinale en figure 10, la tête de coextrusion 50 comprend un puits 80 débouchant dans le canal interne 76 et permettant de recevoir une vis 82 utilisée pour régler le débit du matériau de bande de roulement 24 dans ce canal interne 76.

Dans l'une ou l'autre des variantes illustrées, la tête de coextrusion 50 comprend trois éléments séparateurs 72-1,72-2,72-3 dans la direction transversale DT1, ces trois éléments séparateurs séparant le premier canal d'extrusion 60 en quatre sous-canaux 60-1,60-2,60-3,60-4, créant trois discontinuités dans le premier profil de profilage P62 de la première lame de profilage 62, et séparant le deuxième canal d'extrusion 64 en quatre sous-canaux 64-1,64-2,64-3,64-4. Les formes en saillie 62-1,62-2,62-3 de la première lame de profilage 62 font partie intégrante de ces éléments séparateurs 72-1,72-2,72-3.

Toujours dans l'une ou l'autre des variantes illustrées, la tête de coextrusion 50 comprend deux éléments séparateurs 72-3,72-2 consécutifs dans la direction transversale DT1 chacun suivi dans la direction longitudinale DL1 d'une sortie 70-3,70-2 d'un troisième canal 68-3,68-2 comprenant une unique sous-section triangulaire, le troisième élément séparateur 72-1 étant suivi dans la direction longitudinale DL1 d'une sortie 70-1 d'un troisième canal 68-1 comprenant deux sous-sections triangulaires.

En vue de l'extrusion des différents matériaux de la bande de roulement 24, de la sous-couche 22 et des inserts 28, et comme le montrent les figures 4, 9 et 11 à 13, le premier canal 60 est relié à une première extrudeuse E60, le deuxième canal 64 est relié à une deuxième extrudeuse E64, et les troisièmes canaux 68-1,68-2,68-3 de la deuxième lame de profilage 66 sont reliés à une troisième extrudeuse E68.

Plus en détail, les troisièmes canaux 68-1,68-2,68-3 de la deuxième lame de profilage 66 sont reliés à une troisième extrudeuse E68 via des conduits 84,86 débouchant en face supérieure 88 de la tête de coextrusion 50, comme le puits 80 du canal interne 76.

Comme le montre la figure 11, le premier canal d'extrusion 60 appartient à un premier bloc d'extrusion B60, et ce premier canal d'extrusion 60 débouche en face arrière 90 de la tête de coextrusion 50 où il est relié à la première extrudeuse E60. Le deuxième canal d'extrusion 64 appartient à un second bloc d'extrusion B64, et ce deuxième canal d'extrusion 64 débouche en face arrière 90 de la tête de coextrusion 50 où il est relié à la deuxième extrudeuse E64.

Comme le montre la figure 9, les troisièmes canaux 68-1,68-2,68-3 de la deuxième lame de profilage 66 sont réalisés dans le corps 92 de cette deuxième lame de profilage 66, tandis que les conduits 84,86 les reliant à la troisième extrudeuse E68 sont réalisés au travers du second bloc d'extrusion B64.

Aussi, la tête de coextrusion 50 est formée par l'assemblage du premier bloc d'extrusion B60, de la première lame de profilage 62, du deuxième bloc d'extrusion B64, et des deuxième et troisième lames de profilage 66 et 74.

La tête de coextrusion 50 qui vient d'être décrite permet de mettre en oeuvre un procédé de coextrusion d'un profilé caoutchouteux complexe 20 destiné à la fabrication d'un pneumatique.

Selon l'invention, le procédé consiste à extruder et à profiler les différents matériaux caoutchouteux de ce profilé 20 sur une largeur de coextrusion L50 donnée et dans une direction longitudinale DL1 de coextrusion perpendiculaire au plan transversal PT du profilé coextrudé, le procédé comprenant successivement les étapes consistant en :
a) une extrusion du premier matériau réalisée de manière discontinue dans la largeur de coextrusion L50,
b) un premier profilage de ce premier matériau réalisé de manière discontinue dans la largeur de coextrusion L50,
c) une extrusion du deuxième matériau réalisée de manière discontinue dans la largeur de coextrusion L50 et réalisée de manière à superposer le deuxième matériau sur le premier matériau,
d) un profilage des premier et deuxième matériaux réalisé de manière discontinue dans la largeur de coextrusion L50 et réalisé conjointement à une extrusion du troisième matériau dans chaque discontinuité D20 du premier matériau et du deuxième matériau, et
e) un profilage final des premier, deuxième et troisième matériaux selon un profil final P74 ne présentant pas de discontinuité dans la largeur de coextrusion L50, mais créant une rainure longitudinale 26 dans le profilé 20 située transversalement à côté de chaque insert 28 issu d'une extrusion du troisième matériau selon l'étape d).

Avantageusement, en extrudant le troisième matériau des inserts 28 à la fin du procédé de coextrusion, la géométrie des inserts 28 extrudés est préservée des flux des premier et deuxième matériaux extrudés en amont.

Afin de conférer au moins une sous-section triangulaire à la section d'un insert 28 dans le plan transversal PT du profilé 20, lors de l'étape d), le troisième matériau est extrudé selon une section de sortie dans un plan transversal PT50 comprenant au moins une sous-section triangulaire.

Afin de conférer au moins une sous-section parallélépipédique sous sa sous-section triangulaire à la section d'un insert 28 dans le plan transversal PT du profilé 20, lors de l'étape d), le troisième matériau est extrudé selon une section de sortie dans un plan transversal PT50 comprenant une sous-section parallélépipédique située sous la sous-section triangulaire et se prolongeant transversalement au-delà de cette sous-section triangulaire dans la direction transversale d'extrusion DT1.

Afin de conférer deux sous-sections triangulaires distantes l'une de l'autre dans la direction transversale DT du profilé 20 et reliées par cette sous-section parallélépipédique à la section d'un insert 28 dans le plan transversal PT du profilé 20, lors de l'étape d), le troisième matériau est extrudé selon une section de sortie dans un plan transversal PT50 comprenant deux sous-sections triangulaires reliées par une sous-section parallélépipédique.

Afin de conférer deux sous-sections triangulaires distantes l'une de l'autre dans la direction transversale DT du profilé 20 à la section d'un insert 28 dans le plan transversal PT du profilé 20, lors de l'étape d), le troisième matériau est extrudé selon une section de sortie dans un plan transversal PT50 comprenant deux sous-sections triangulaires distantes l'une de l'autre dans la direction transversale d'extrusion DT1.

En vue d'extruder la bande 38 de bande roulement 24 de section sensiblement parallélépipédique entre deux inserts 28 de section triangulaire se situant dans une même discontinuité D20 du profilé 20 tout en étant distants l'un de l'autre, conjointement à la réalisation de l'étape c), on dévie une partie du flux du deuxième matériau vers une discontinuité D20 créée lors des étapes a), b) et c) dans les premier et deuxième matériaux superposés et entre les deux sous-sections triangulaires distantes de sortie du troisième matériau dans la direction transversale d'extrusion DT1.

En vue d'insérer des inserts 28 dans les trois rainures longitudinales 26 d'un profilé 20, lors des étapes a) à d), on créée trois discontinuités dans les premier et deuxième matériaux dans la direction transversale d'extrusion DT1.

En raison de la mise en œuvre du procédé sur la machine de coextrusion 52 à rouleau 54, la direction longitudinale de coextrusion DL1 s'étend radialement autour de l'axe central AC1.

De préférence, les étapes d'extrusion et de profilage du procédé sont réalisées entre un rouleau 54 et une tête d'extrusion 50 comprenant une paroi inférieure 56 à profil cylindrique coopérant avec la paroi extérieure 58 du rouleau.

La présente invention couvre aussi un profilé caoutchouteux complexe obtenu à partir du procédé qui vient d'être décrit, et par exemple à l'aide de la tête de coextrusion qui vient d'être décrite.

Parallèlement, l'invention couvre aussi un pneumatique fabriqué à partir d'un profilé caoutchouteux complexe obtenu à partir du procédé qui vient d'être décrit.

## Revendications

1. Procédé de coextrusion d'un profilé caoutchouteux complexe (20) destiné à la fabrication d'un pneumatique, le profilé complexe (20) comprenant dans sa hauteur (H20) une première couche (22), dite sous-couche, d'un premier matériau caoutchouteux et une deuxième couche (24), dite bande de roulement, d'un deuxième matériau caoutchouteux superposée sur la sous-couche, cette bande de roulement (24) et cette sous-couche (22) présentant au moins une discontinuité (D20) dans la largeur (W20) du profilé complexe qui s'étend dans une direction transversale (DT) de façon à ce qu'au moins un insert (28) d'un troisième matériau caoutchouteux soit inséré dans une discontinuité (D20) de la bande de roulement (24) et de la sous-couche (22) lors de la coextrusion, le procédé consistant à extruder et à profiler les différents matériaux caoutchouteux sur une largeur de coextrusion (L50) donnée et dans une direction longitudinale (DL1) de coextrusion perpendiculaire au plan transversal (PT) du profilé coextrudé, le procédé comprenant successivement les étapes consistant en :
a) une extrusion du premier matériau réalisée de manière discontinue dans la largeur de coextrusion (L50),
b) un premier profilage de ce premier matériau réalisé de manière discontinue dans la largeur de coextrusion (L50),
c) une extrusion du deuxième matériau réalisée de manière discontinue dans la largeur de coextrusion (L50) et réalisée de manière à superposer le deuxième matériau sur le premier matériau,
d) un profilage des premier et deuxième matériaux réalisé de manière discontinue dans la largeur de coextrusion (L50) et réalisé conjointement à une extrusion du troisième matériau dans chaque discontinuité (D20) du premier matériau et du deuxième matériau, et
e) un profilage final des premier, deuxième et troisième matériaux selon un profil final (P74) ne présentant pas de discontinuité dans la largeur de coextrusion (L50), mais créant une rainure longitudinale (26) dans le profilé (20) située transversalement à côté de chaque insert (28) issu d'une extrusion du troisième matériau selon l'étape d).

2. Procédé de coextrusion d'un profilé caoutchouteux complexe (20) selon la revendication 1, dans lequel, lors de l'étape d), le troisième matériau est extrudé selon une section de sortie dans un plan transversal (PT50) comprenant au moins une sous-section triangulaire.

3. Procédé de coextrusion d'un profilé caoutchouteux complexe (20) selon la revendication 2, dans lequel, lors de l'étape d), le troisième matériau est extrudé selon une section de sortie dans un plan transversal (PT50) comprenant une sous-section parallélépipédique située sous la sous-section triangulaire et se prolongeant transversalement au-delà de cette sous-section triangulaire dans la direction transversale d'extrusion (DT1).

4. Procédé de coextrusion d'un profilé caoutchouteux complexe (20) selon la revendication 3, dans lequel, lors de l'étape d), le troisième matériau est extrudé selon une section de sortie dans un plan transversal (PT50) comprenant deux sous-sections triangulaires reliées par une sous-section parallélépipédique.

5. Procédé de coextrusion d'un profilé caoutchouteux complexe (20) selon la revendication 2, dans lequel, lors de l'étape d), le troisième matériau est extrudé selon une section de sortie dans un plan transversal (PT50) comprenant deux sous-sections triangulaires distantes l'une de l'autre dans la direction transversale d'extrusion (DT1).

6. Procédé de coextrusion d'un profilé caoutchouteux complexe (20) selon la revendication 5, dans lequel, conjointement à la réalisation de l'étape c), on dévie une partie du flux du deuxième matériau vers une discontinuité (D20) créée lors des étapes a), b) et c) dans les premier et deuxième matériaux superposés et entre deux sous-sections triangulaires distantes de sortie du troisième matériau dans la direction transversale d'extrusion (DT1).

7. Procédé de coextrusion d'un profilé caoutchouteux complexe (20) selon l'une des revendications précédentes, dans lequel, lors des étapes a) à d), on créée trois discontinuités (D20) dans les premier et deuxième matériaux dans la direction transversale d'extrusion (DT1).

8. Procédé de coextrusion d'un profilé caoutchouteux complexe (20) selon l'une des revendications précédentes, dans lequel la direction longitudinale de coextrusion (DL1) s'étend radialement autour d'un axe central (AC1).

9. Procédé de coextrusion d'un profilé caoutchouteux complexe (20) selon l'une des revendications précédentes, dans lequel les étapes d'extrusion et de profilage sont réalisées entre un rouleau (54) et une tête d'extrusion (50) comprenant une paroi inférieure (56) à profil cylindrique coopérant avec la paroi extérieure (58) du rouleau.

## Patentansprüche

1. Verfahren zur Koextrusion eines komplexen Kautschukprofils (20) zur Herstellung eines Reifens, wobei das komplexe Profil (20) in seiner Höhe (H20) eine erste Schicht (22), Unterschicht genannt, aus einem ersten Kautschukmaterial und eine zweite Schicht (24), Laufstreifen genannt, aus einem zweiten Kautschukmaterial, die der Unterschicht überlagert ist, umfasst, wobei dieser Laufstreifen (24) und diese Unterschicht (22) mindestens eine Diskontinuität (D20) in der Breite (W20) des komplexen Profils aufweisen, die sich in eine Querrichtung (DT) erstreckt, so dass mindestens ein Einsatz (28) aus einem dritten Kautschukmaterial in eine Diskontinuität (D20) des Laufstreifens (24) und der Unterschicht (22) bei der Koextrusion eingefügt wird, wobei das Verfahren darin besteht, die verschiedenen Kautschukmaterialien über eine gegebene Koextrusionsbreite (L50) und in eine Koextrudionslängsrichtung (DL1) senkrecht zur Querebene (PT) des koextrudierten Profils zu extrudieren und zu profilieren, wobei das Verfahren nacheinander die in Folgendem bestehenden Schritte umfasst:
a) ein Extrudieren des ersten Materials, das diskontinuierlich in der Koextrusionsbreite (L50) ausgeführt wird,
b) ein erstes Profilieren dieses ersten Materials, das diskontinuierlich in der Koextrusionsbreite (L50) ausgeführt wird,
c) ein Extrudieren des zweiten Materials, das diskontinuierlich in der Koextrusionsbreite (L50) ausgeführt wird und so ausgeführt wird, dass das zweite Material dem ersten Material überlagert ist,
d) ein Profilieren der ersten und zweiten Materialien, das diskontinuierlich in der Koextrusionsbreite (L50) ausgeführt wird und gemeinsam mit einem Extrudieren des dritten Materials in jeder Diskontinuität (D20) des ersten und des zweiten Materials ausgeführt wird, und
e) ein Endprofilieren der ersten, zweiten und dritten Materialien gemäß einem Endprofil (P74), das keine Diskontinuität in der Koextrusionsbreite (L50) aufweist, aber eine Längsrille (26) in dem Profil (20) erzeugt, die in Querrichtung neben jedem Einsatz (28) gelegen ist, der aus einer Extrusion des dritten Materials gemäß Schritt d) hervorgegangen ist.

2. Verfahren zur Koextrusion eines komplexen Kautschukprofils (20) nach Anspruch 1, bei dem beim Schritt d) das dritte Material gemäß einem Austrittsquerschnitt in einer Querebene (PT50) extrudiert wird, der mindestens einen dreieckigen Teilquerschnitt umfasst.

3. Verfahren zur Koextrusion eines komplexen Kautschukprofils (20) nach Anspruch 2, bei dem beim Schritt d) das dritte Material gemäß einem Austrittsquerschnitt in einer Querebene (PT50) extrudiert wird, der einen parallelepipedischen Teilquerschnitt umfasst, der unter dem dreieckigen Teilquerschnitt gelegen ist und sich in Querrichtung über diesen dreieckigen Teilquerschnitt hinaus in die Extrusionsquerrichtung (DT1) fortsetzt.

4. Verfahren zur Koextrusion eines komplexen Kautschukprofils (20) nach Anspruch 3, bei dem beim Schritt d) das dritte Material gemäß einem Austrittsquerschnitt in einer Querebene (PT50) extrudiert wird, der zwei dreieckige Teilquerschnitte umfasst, die durch einen parallelepipedischen Teilquerschnitt verbunden sind.

5. Verfahren zur Koextrusion eines komplexen Kautschukprofils (20) nach Anspruch 2, bei dem beim Schritt d) das dritte Material gemäß einem Austrittsquerschnitt in einer Querebene (PT50) extrudiert wird, der zwei dreieckige Teilquerschnitte umfasst, die voneinander in Extrusionsquerrichtung (DT1) beabstandet sind.

6. Verfahren zur Koextrusion eines komplexen Kautschukprofils (20) nach Anspruch 5, bei dem gemeinsam mit der Ausführung des Schritts c) ein Teil des Stroms des zweiten Materials zu einer Diskontinuität (D20) umgeleitet wird, die bei den Schritten a), b) und c) in den überlagerten ersten und zweiten Materialien erzeugt wurde, und zwischen zwei beabstandeten dreieckigen Austrittsteilquerschnitten des dritten Materials in Extrusionsquerrichtung (DT1).

7. Verfahren zur Koextrusion eines komplexen Kautschukprofils (20) nach einem der vorhergehenden Ansprüche, bei dem bei den Schritten a) bis d) drei Diskontinuitäten (D20) in den ersten und zweiten Materialien in Extrusionsquerrichtung (DT1) erzeugt werden.

8. Verfahren zur Koextrusion eines komplexen Kautschukprofils (20) nach einem der vorhergehenden Ansprüche, bei dem sich die Koextrusionslängsrichtung (DL1) radial um eine zentrale Achse (AC1) herum erstreckt.

9. Verfahren zur Koextrusion eines komplexen Kautschukprofils (20) nach einem der vorhergehenden Ansprüche, bei dem die Extrusions- und Profilierungsschritte zwischen einer Walze (54) und einem Extrusionskopf (50) ausgeführt werden, der eine untere Wand (56) mit zylindrischem Profil umfasst, die mit der Außenwand (58) der Walze zusammenwirkt.

## Claims

1. A method of coextruding a complex rubber profile (20) intended for the manufacture of a tire, the complex profile (20) comprising in its height (H20) a first layer (22), referred to as the underlayer, of a first rubber material and a second layer (24), referred to as the tread, of a second rubber material superimposed on the underlayer, the tread (24) and the sublayer (22) having at least one discontinuity (D20) in the width (W20) of the complex profile that extends in a transverse direction (DT) so that at least one insert (28) of a third rubbery material is inserted into a discontinuity (D20) of the tread (24) and of the sublayer (22) during the coextrusion, the process including the extrusion and profiling of the various rubbery materials over a given coextrusion width (L50) and in a longitudinal coextrusion direction (DL1) perpendicular to the transverse plane (PT) of the coextruded profile, the process comprising, in succession, the steps comprising:
a) an extrusion of the first material carried out discontinuously in the coextrusion width (L50),
b) a first profiling of this first material carried out discontinuously in the coextrusion width (L50),
c) an extrusion of the second material carried out discontinuously in the coextrusion width (L50) and carried out in such a way as to superimpose the second material on the first material,
d) profiling of the first and second materials discontinuously in the coextrusion width (L50) and carried out together with an extrusion of the third material in each discontinuity (D20) of the first material and the second material, and
e) final profiling of the first, second and third materials into a final profile (P74) having no discontinuity in the coextrusion width (L50), but creating a longitudinal groove (26) in the profile (20) located transversely next to each insert (28) resulting from an extrusion of the third material according to step d).

2. A method of coextruding a complex rubbery profile (20) according to claim 1, wherein, during step d), the third material is extruded in an exit section in a transverse plane (PT50) comprising at least one triangular subsection.

3. The method of coextruding a complex rubbery profile (20) according to claim 2, wherein, during step d), the third material is extruded according to an exit section in a transverse plane (PT50) comprising a parallelepipedic subsection located below the triangular subsection and extending transversely beyond this triangular subsection in the transverse direction of extrusion (DT1).

4. The method of coextruding a complex rubbery profile (20) according to claim 3, wherein, during step d), the third material is extruded in an exit section in a transverse plane (PT50) comprising two triangular subsections connected by a parallelepiped subsection.

5. The method of coextruding a complex rubbery profile (20) according to claim 2, wherein, during step d), the third material is extruded according to an exit section in a transverse plane (PT50) comprising two triangular subsections spaced apart in the transverse extrusion direction (DT1).

6. A method of coextruding a complex rubbery profile (20) according to claim 5, wherein, in conjunction with the performance of step c), a portion of the flow of the second material is diverted to a discontinuity (D20) created in steps a), b), and c) in the superimposed first and second materials and between two spaced apart triangular outlet subsections of the third material in the transverse direction of extrusion (DT1).

7. A method of coextruding a complex rubber profile (20) according to any of the preceding claims, wherein, during steps a) to d), three discontinuities (D20) are created in the first and second materials in the transverse extrusion direction (DT1).

8. A method of coextruding a complex rubber profile (20) according to any of the preceding claims, wherein the longitudinal direction of coextrusion (DL1) extends radially about a central axis (AC1).

9. A method of coextruding a complex rubbery profile (20) according to one of the preceding claims, in which the extrusion and profiling steps are carried out between a roller (54) and an extrusion head (50) comprising a lower wall (56) with a cylindrical profile cooperating with the outer wall (58) of the roller.
